# FASCICULE DE BREVET EUROPEEN

(11) **EP 0 744 350 B1**
(45) Date de publication et mention de la délivrance du brevet: **01.08.2001**
(21) Numéro de dépôt: 96401075.5
(22) Date de dépôt: 15.05.1996
(51) Int. Cl.: B65D 25/52, G01F 19/00

(54) **Conditionnement avec doseur**
Verpackung mit Dosierspender
Package with dosing device

(30) Priorité: 23.05.1995 FR 9506108
(43) Date de publication de la demande: 27.11.1996
(73) Titulaire: COMPO GmbH & Co.KG, 48157 Münster (DE)
(72) Inventeur: Fani, Gérard, 70150 Etuz (FR)
(74) Mandataire: Filbry, Eberhard (DE)

(56) Documents cités:
- CH-A- 233 214
- DE-A- 4 214 171
- DE-U- 8 808 800
- US-A- 4 079 859
- US-A- 5 123 460

## Description

La présente invention se rapporte à un nouveau conditionnement avec doseur.

Elle trouve une application préférée pour les produits utilisés dans l'horticulture et dans l'entretien des jardins, sans être limitée pour autant à ce type de produits.

Généralement, les produits ci-dessus sont conditionnés dans des emballages en carton ou en papier. Cependant, en raison de la sensibilité à l'humidité et de la relative fragilité de tels emballages, des conditionnements fermés, par exemple de type flacon ou bouteille en matière plastique ont été également proposés, notamment dans les cas où les produits qu'ils renferment peuvent présenter certains risques pour la santé.

Dans ces derniers types d'emballages, un doseur-verseur indépendant est également souvent associé au flacon pour permettre à l'utilisateur de mesurer la quantité de produit versé.

Dans ce cas, l'utilisateur ouvre le flacon et verse la quantité nécessaire de produit dans le doseur-verseur, puis referme le flacon.

Un conditionnement avec doseur est connu par le document US-A-4 079 859

Ce type d'emballage présente cependant l'inconvénient que l'opération de versement du produit dans le doseur ne remplit pas toutes les conditions de sécurité souhaitables. L'utilisateur peut en effet renverser une partie du produit, avec le risque que le produit vienne en contact avec lui, soit directement avec ses mains, soit indirectement par inhalation, ce qui peut s'avérer dangereux, notamment au niveau de la peau ou des voies respiratoires, lorsqu'il s'agit par exemple de certaines spécialités phytosanitaires ou anti-nuisibles.

Par ailleurs, certains produits utilisés dans l'horticulture ou l'agriculture dégagent une forte odeur pouvant indisposer l'utilisateur pendant qu'il dose la quantité dont il a besoin.

Enfin, les risques d'ingestion de produits dangereux ne sont pas complètement éliminés, en particulier les conditionnements viennent à être manipulés par des enfants.

La présente invention a pour but de remédier en grande partie aux inconvénients ci-dessus, en proposant un nouveau conditionnement avec doseur permettant d'éliminer tout contact avec le produit contenu dans le conditionnement, aussi bien par contact direct que par contact par inhalation.

Pour atteindre ce but, le nouveau conditionnement avec doseur selon l'invention du type comportant un corps creux muni d'un orifice, un doseur creux amovible et un moyen de fermeture dudit orifice, ledit orifice comprenant des moyens de liaison et ledit doseur comportant une ouverture munie de moyens de liaison complémentaires permettant de fixer de façon amovible et étanche ledit doseur sur ledit orifice, se caractérise en ce que la face du corps creux portant ledit orifice est une surface à plan incliné et en ce que l'axe longitudinal de cette surface et l'axe vertical dudit corps creux forment entre eux un angle déterminé.

Le produit présent dans le conditionnement selon l'invention peut donc, lorsque lesdits moyens de liaison et lesdits moyens de liaison complémentaires sont reliés entre eux, passer de l'intérieur dudit corps creux vers l'intérieur dudit doseur, ou inversement, sans contact avec l'extérieur

Selon l'invention, l'axe longitudinal du doseur est dirigé vers le bas, lorsqu'il est fixé sur ledit corps creux, de façon à faciliter le versement de la quantité souhaitée de produit dans le doseur.

Selon une forme de réalisation préférée de l'invention, l'axe longitudinal du doseur fixé sur le corps creux et l'axe du plan incliné du corps creux sont de préférence sensiblement parallèles ou forment entre eux un angle variant entre environ 5° et environ 10°.

Avantageusement, les moyens de liaison et les moyens de liaison complémentaires consistent notamment en des systèmes de liaison par vissage, par emboîtement, des systèmes à baïonnette, encliquetage ou similaires.

Selon l'invention, le doseur comprend une partie formant réservoir se terminant par ladite ouverture, la forme et la dimension de ladite ouverture étant appropriées pour pouvoir venir se fixer sur ledit orifice par l'intermédiaire des moyens de liaison.

Selon une première forme de réalisation de la présente invention, le corps creux est monobloc et comporte sur l'une de ses faces un évidement formant une surface de contact sensiblement plane, de préférence de dimension sensiblement égale à celle du doseur et la surface de contact est munie d'un moyen d'accrochage permettant de fixer de façon amovible le doseur.

Selon cette forme de réalisation, le doseur comporte également une face sensiblement plane pouvant venir se plaquer contre la surface de contact du corps creux, le doseur étant maintenu dans cette position par les moyens d'accrochage.

Avantageusement, les moyens d'accrochage consistent en une partie formant saillie de forme et de dimension légèrement inférieure à celle de l'ouverture dudit doseur et comportant sur sa face externe une ou plusieurs excroissances ou ergots permettant l'accrochage dudit doseur.

De préférence, le moyen de fermeture du corps creux consiste en un bouchon, du type notamment à sécurité, connu en soi.

Selon une autre forme de réalisation préférée de la présente invention, le corps creux est monobloc et comporte sur sa face supérieure une surface de contact sensiblement plane, de préférence de dimension sensiblement égale à celle du doseur et le doseur comporte une face sensiblement plane pouvant venir se plaquer contre la surface de contact du corps creux, lorsque le doseur est fixé sur l'orifice par l'intermédiaire des moyens de liaison, en position de non utilisation.

Avantageusement, le doseur comporte une région coudée entre la partie formant réservoir et l'ouverture et, selon cette forme de réalisation, le doseur lui-même constitue le moyen de fermeture du corps creux.

Selon l'invention, le doseur est réalisé en une matière transparente et comporte un moyen de dosage, notamment des graduations, permettant de lire la quantité de produit versé. En variante, le doseur peut comporter une partie transparente sur une portion seulement de sa surface, par exemple sous forme d'une fenêtre, permettant de contrôler la quantité de produit versé.

De préférence, la face du corps creux sur laquelle est disposé l'orifice est une surface à plan incliné dont l'axe longitudinal forme avec l'axe vertical du corps creux un angle d'environ 45°. De cette façon, le versement du produit à l'intérieur du doseur peut se faire aisément et avec une bonne précision, le doseur étant en position verticale et l'utilisateur n'étant pas obligé de retourner complètement le corps creux. De la même façon, si l'utilisateur a versé une quantité trop importante de produit dans le doseur, il peut avec la même facilité reverser une partie du produit à l'intérieur du corps creux.

Avantageusement, l'orifice du corps creux est muni, à l'intérieur de celui-ci et dans une région proche de l'orifice, d'un tamis ou tout autre système similaire permettant un guidage et un écoulement relativement constant du produit.

Le conditionnement avec doseur selon la présente invention peut être réalisé en matière plastique, notamment en polypropylène, polystyrène demi-choc, polyéthylène, polychlorure de vinyle ou toute autre matière présentant les qualités d'isolation, de résistance et d'imperméabilité nécessaires aux produits conditionnés.

Des avantages et caractéristiques supplémentaires de l'invention apparaîtront encore à la lumière de la description plus détaillée qui suit de modes de réalisation préférés de l'invention, donnés à titre purement illustratif et non limitatif, ainsi qu'aux figures qui s'y rapportent et dans lesquelles :
- la figure 1 représente une vue schématique de côté du corps creux selon un premier mode de réalisation du conditionnement avec doseur selon l'invention;
- la figure 2 représente une vue schématique de côté du mode de réalisation de l'invention de la figure 1, en mode de non utilisation;
- la figure 3 représente une vue schématique en perspective du mode de réalisation du doseur de la figure 2;
- la figure 4 représente une vue schématique en perspective du mode de réalisation de l'invention de la figure 2, en mode d'utilisation;
- la figure 5 représente une vue schématique latérale d'un second mode de réalisation du conditionnement avec doseur de l'invention, en mode de non utilisation;
- la figure 6 représente une vue schématique du mode de réalisation du doseur de la figure 5; et
- la figure 7 représente une vue schématique en perspective du second mode de réalisation de la figure 5, en position d'utilisation.

Dans les figures, les mêmes références numériques désignent les mêmes éléments.

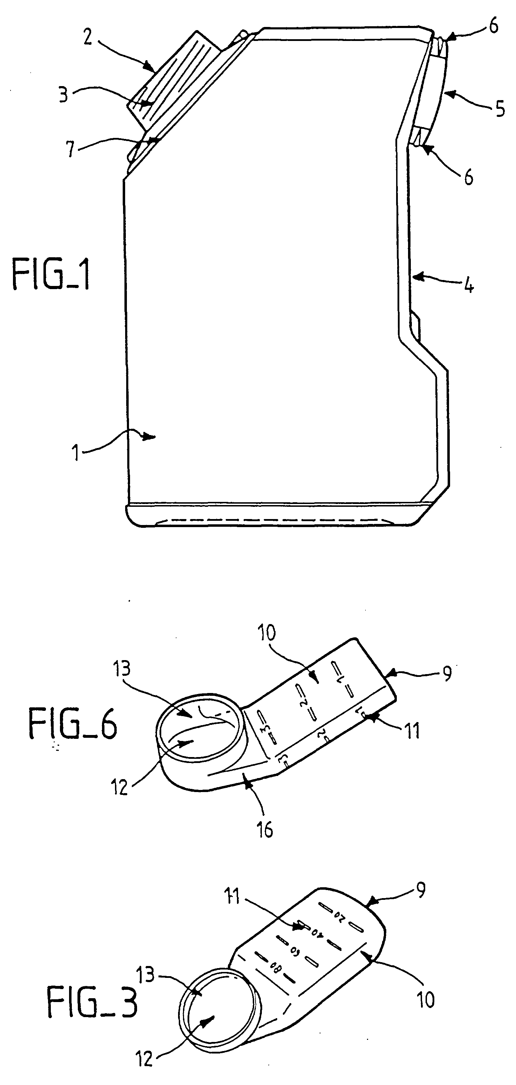

En se référant maintenant à la figure 1, le conditionnement avec doseur selon l'invention comprend un corps creux 1 monobloc de forme parallélépipédique en matière plastique. Le corps creux 1 comporte sur l'un de ses côtés un orifice 2 muni d'un filetage 3 permettant de visser soit le doseur, soit le bouchon, ainsi que cela apparaîtra plus clairement sur les figures suivantes.

Le corps creux 1 comporte également sur l'une de ses faces un évidement 4 muni d'un socle 5 de dimension adaptée au doseur et muni d'ergots 6 pour la fixation du doseur.

La face du corps creux 1 sur laquelle est prévu l'orifice 2 est une surface à plan incliné 7 dont l'axe longitudinal forme un angle d'environ 45° avec le plan vertical du corps creux 1, de façon que le versement du produit contenu dans le corps creux vers le doseur (ou inversement) soit facilité.

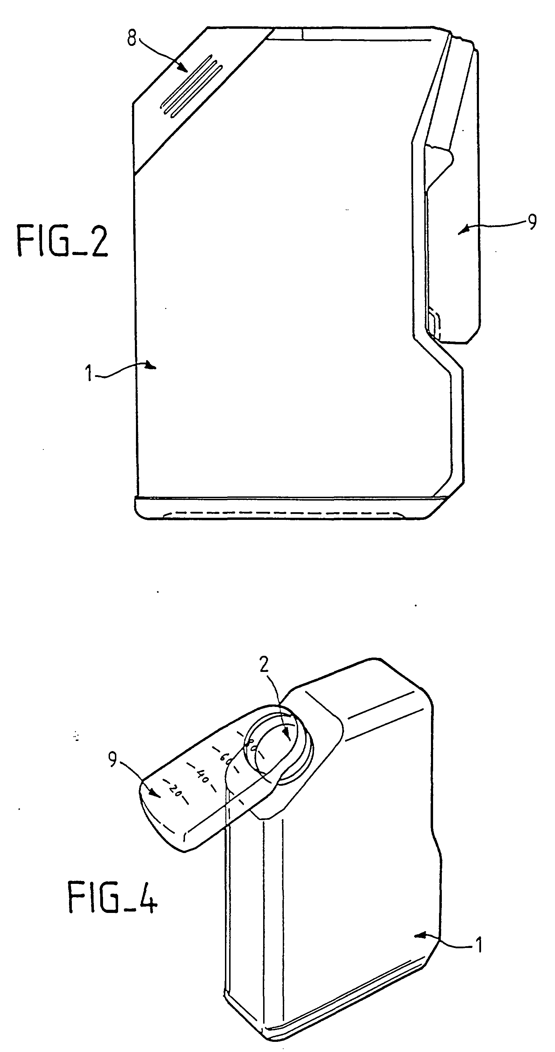

En se référant maintenant à la figure 2, le corps creux 1, représenté en position de non utilisation, est fermé par un bouchon de sécurité 8 et le doseur 9 est fixé sur le socle. L'évidement prévu sur le corps creux 1 permet de loger le doseur 9 de façon à ce que l'ensemble corps creux - doseur occupe un encombrement minimal.

La figure 3 montre une forme de réalisation du doseur 9. Selon cette forme de réalisation, le doseur 9 réalisé en matière transparente comporte une partie formant réservoir 10 munie de graduations 11 pour faciliter la lecture de la quantité de produit versé.

Le doseur 9 comporte de plus une ouverture 12 comportant un pas de vis 13 adapté au filetage aménagé sur l'orifice du corps creux.

En se reportant à la figure 4, le conditionnement doseur selon l'invention fonctionne de la manière suivante.

Le doseur 9, après avoir été détaché du socle (non représenté sur la figure 3), est vissé sur l'orifice 2 du corps creux 1 par l'intermédiaire du filetage et assure ainsi l'étanchéité entre les deux éléments. L'utilisateur n'a donc aucun contact, ni par le toucher, ni par voie respiratoire, avec le produit contenu à l'intérieur du corps creux 1.

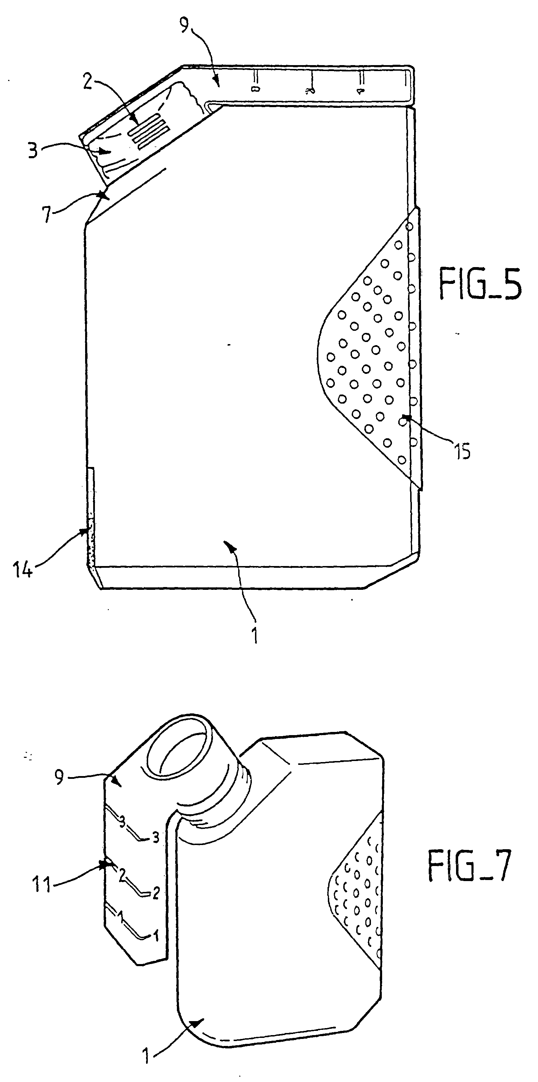

Les figures 5 à 7 illustrent une autre forme de réalisation de la présente invention.

En se référant maintenant à la figure 5, le corps creux 1 comporte un orifice 2 muni d'un filetage 3 permettant le vissage du doseur 9. Dans cette forme de réalisation, le corps creux 1 ne comporte pas de bouchon, le doseur 9 faisant lui-même office de bouchon lorsque le conditionnement n'est pas utilisé.

La face du corps creux 1 sur laquelle est prévu l'orifice 2 constitue une surface à plan incliné 7 sur faciliter le versement du produit. La base inférieure du corps creux 1 est munie d'une partie transparente 14 permettant de vérifier le niveau de remplissage du corps creux 1.

Le corps creux 1 est également muni d'un dispositif agrippant 15 destiné à faciliter la prise et la tenue en main du conditionnement.

Ainsi qu'il apparaît de la figure 6, le doseur 9 transparent comporte une partie formant réservoir 10 munie de graduations 11. Le doseur 9 comporte également une ouverture 12 comportant un pas de vis 13 pour la fixation sur le corps creux.

Le doseur 9 comporte de plus une région coudée 16 située entre l'ouverture 12 et la partie formant réservoir 10. Cette région coudée 16 permet à la partie formant réservoir 10 du doseur 9, lorsqu'elle est placée sur le corps creux en position de non utilisation, d'être sensiblement parallèle avec l'axe longitudinal de la face du corps creux sur laquelle elle repose. Ainsi, l'ensemble formé par le corps creux et le doseur occupe un encombrement minimal

Le fonctionnement du conditionnement est illustré sur la figure 7. Ainsi qu'il apparaît sur cette figure, l'utilisateur, en effectuant une rotation d'un demi-tour du doseur 9, peut aisément verser la quantité de produit contenu à l'intérieur du corps creux 1 dont il a besoin, en s'aidant des graduations 11. Une fois cette quantité atteinte, il détache le doseur 9 du corps creux 1 en le dévissant complètement et peut répandre le produit à l'endroit désiré.

Avantageusement, le doseur est muni d'un système à sécurité, réduisant les risques d'ouverture du conditionnement par les enfants.

Le conditionnement doseur selon l'invention est particulièrement bien adapté pour les produits sous forme de poudres, granulés, graines, liquides pouvant présenter un danger et/ou nécessitant un dosage avant utilisation. On citera à titre illustratif et non limitatif les herbicides, produits phytosanitaires, anti-nuisibles, produits fertilisants, notamment pour l'horticulture, le jardin et l'agriculture, produits de lavage ou de rinçage, produits désinfectants, etc.

Il va de soi que l'invention en se limite nullement aux formes de réalisation préférées qui viennent d'être décrites mais en embrasse au contraire toutes les variantes. L'homme du métier aura tout loisir de modifier certains des éléments de la présente invention, par exemple le positionnement, les dimensions des parties constitutives de l'invention, sans pour autant sortir du cadre des caractéristiques essentielles de celle-ci, telles que définies dans les revendications qui suivent.

## Revendications

1. Conditionnement avec doseur du type comportant un corps creux (1) muni d'un orifice (2), un doseur creux (9) amovible et un moyen de fermeture dudit orifice (2), ledit orifice (2) comprenant des moyens de liaison (3) et ledit doseur (9) comportant une ouverture (12) munie de moyens de liaison complémentaires (13) permettant de fixer de façon amovible et étanche ledit doseur (9) sur ledit orifice (2), caractérisé en ce que la face du corps creux (1) portant ledit orifice (2) est une surface à plan incliné et en ce que l'axe longitudinal de cette surface et l'axe vertical dudit corps creux (1) forment entre eux un angle déterminé, l'axe longitudinal dudit doseur (9) étant dirigé, en mode de remplissage du doseur, vers le bas lorsqu'il est fixé sur ledit orifice (2) du corps creux (1) et que le corps creux est vertical.

2. Conditionnement avec doseur selon la revendication 1, caractérisé en ce que l'axe longitudinal du doseur (9) et l'axe dudit plan incliné du corps creux (1) sont de préférence sensiblement parallèles ou forment entre eux un angle variant entre environ 5° et environ 10°.

3. Conditionnement avec doseur selon la revendication 1, caractérisé en ce que l'axe longitudinal de ladite surface à plan incliné et l'axe vertical dudit corps creux (1) forment entre eux un angle d'environ 45°.

4. Conditionnement avec doseur selon l'une quelconque des revendications 1 à 3, caractérisé en ce que les moyens de liaison (3) et les moyens de liaison complémentaires (13) consistent notamment en des systèmes de liaison par vissage, par emboîtement, systèmes de liaison à baïonnette, encliquetage ou similaires.

5. Conditionnement avec doseur selon l'une quelconque des revendications 1 à 4, caractérisé en ce que le doseur (9) comprend une partie formant réservoir (10) se terminant par ladite ouverture (12), la forme et la dimension de ladite ouverture (12) étant appropriées pour pouvoir venir se fixer sur ledit orifice (2) par l'intermédiaire des moyens de liaison (3, 13).

6. Conditionnement avec doseur selon l'une quelconque des revendications 1 à 5, caractérisé en ce que le corps creux (1) comporte, sur l'une de ses faces, un évidement (4) formant,une surface de contact sensiblement plane, de préférence de dimension sensiblement égale à celle du doseur (9), ladite surface de contact étant munie d'un moyen d'accrochage dudit doseur (9) en mode de non utilisation.

7. Conditionnement avec doseur selon l'une quelconque des revendications 1 à 6, caractérisé en ce que ledit doseur (9) comporte une face sensiblement plane pouvant venir se plaquer contre ladite surface de contact du corps creux, ledit doseur (9) étant maintenu dans cette position en mode de non utilisation par lesdits moyens d'accrochage.

8. Conditionnement avec doseur selon la revendication 6 ou 7, caractérisé en ce que lesdits moyens d'accrochage consistent en une partie formant socle (5) de forme et de dimension légèrement inférieures à celles de l'ouverture (12) dudit doseur (9) et comportant sur sa face externe un ou plusieurs ergots (6) permettant l'accrochage dudit doseur (9).

9. Conditionnement avec doseur selon l'une quelconque des revendications 1 à 8, caractérisé en ce que le moyen de fermeture du corps creux (1) consiste en un bouchon (8), de préférence du type à sécurité.

10. Conditionnement avec doseur selon l'une quelconque des revendications 1 à 5, caractérisé en ce que le corps creux (1) comporte sur sa face supérieure une surface de contact sensiblement plane, de préférence de dimension sensiblement égale à celle du doseur (9) et en ce que le ledit doseur (9) comporte une face sensiblement plane pouvant venir se plaquer contre ladite surface de contact du corps creux (1), lorsque ledit doseur (9) est fixé audit orifice (2) par l'intermédiaire des moyens de liaison (3, 13), en position de non utilisation.

11. Conditionnement avec doseur selon la revendication 10, caractérisé en ce que le doseur ( 9) comporte une région coudée (16) entre la partie formant réservoir (10) et l'ouverture (12).

12. Conditionnement avec doseur selon la revendication 11, caractérisé en ce que le doseur (9) lui-même constitue le moyen de fermeture du corps creux (1) et comporte de préférence un système d'ouverture du type à sécurité.

13. Conditionnement avec doseur selon l'une quelconque des revendications 1 à 12, caractérisé en ce que le doseur (9) est au moins en partie transparent et comporte un moyen de dosage, notamment des graduations (11), permettant de lire la quantité de produit versé.

14. Conditionnement avec doseur selon l'une quelconque des revendications 1 à 13, caractérisé en ce que l'orifice (2) dudit corps creux (1) comporte à l'intérieur de celui-ci et dans une région proche de son extrémité un tamis.

15. Conditionnement avec doseur selon l'une quelconque des revendications 1 à 14, caractérisé en ce que le corps creux (1) est monobloc.

## Patentansprüche

1. Verpackung mit Dosierspender, vom Typ mit einem Hohlkörper (1), der mit einer Öffnung (2) versehen ist, einem abnehmbaren hohlen Dosierspender (9) und einem Verschlussmittel zum Verschließen der genannten Öffnung (2), wobei die Öffnung (2) Verbindungsmittel (3) aufweist und der Dosierspender (9) einen Durchbruch (12) enthält, der mit komplementären Verbindungsmitteln (13) versehen ist, durch die der Dosierspender (9) an der Öffnung (2) abnehmbar und abgedichtet befestigt werden kann, dadurch gekennzeichnet, dass die Seite des Hohlkörpers (1) mit der Öffnung (2) eine Fläche mit geneigter Ebene ist und dass die Längsachse dieser Fläche und die senkrechte Achse des Hohlkörpers (1) einen bestimmten Winkel miteinander einschließen, wobei die Längsachse des Dosierspenders (9) im Füllzustand des Dosierspenders nach unten gerichtet ist, wenn dieser an der Öffnung (2) des Hohlkörpers befestigt ist und der Hohlkörper senkrecht steht.

2. Verpackung mit Dosierspender nach Anspruch 1, dadurch gekennzeichnet, daß die Längsachse des Dosierspenders (9) und die Achse der geneigten Ebene des Hohlkörpers (1) bevorzugt im wesentlichen parallel verlaufen oder einen Winkel miteinander einschließen, der zwischen etwa 5° und etwa 10° liegt.

3. Verpackung mit Dosierspender nach Anspruch 1, dadurch gekennzeichnet, daß die Längsachse der Fläche mit geneigter Ebene und die senkrechte Achse des Hohlkörpers (1) einen Winkel von etwa 45° miteinander einschließen.

4. Verpackung mit Dosierspender nach einem der Ansprüche 1 bis 3, dadurch gekennzeichnet, daß die Verbindungsmittel (3) und die komplementären Verbindungsmittel (13) insbesondere aus Schraubverbindungen, Steckverbindungen, Bajonettverschlüssen, Schnappverbindungen oder dergleichen bestehen.

5. Verpackung mit Dosierspender nach einem der Ansprüche 1 bis 4, dadurch gekennzeichnet, daß der Dosierspender (9) einen Vorratsteil (10) aufweist, der in dem Durchbruch (12) endet, wobei Form und Abmessungen des Durchbruchs (12) dazu geeignet sind, mit Hilfe der Verbindungsmittel (3, 13) an der Öffnung (2) befestigt zu werden.

6. Verpackung mit Dosierspender nach einem der Ansprüche 1 bis 5, dadurch gekennzeichnet, daß der Hohlkörper (1) an der eine Seite eine Ausnehmung (4) aufweist, die eine im wesentlichen ebene Kontaktfläche bildet, deren Abmessungen vorzugsweise im wesentlichen gleich denen des Dosierspenders (9) sind, wobei die Kontaktfläche mit einer Vorrichtung zum Einhängen des Dosierspenders (9) im nicht verwendeten Zustand versehen ist.

7. Verpackung mit Dosierspender nach einem der Ansprüche 1 bis 6, dadurch gekennzeichnet, daß der Dosierspender (9) eine im wesentlichen ebene Fläche enthält, welche an die Kontaktfläche des Hohlkörpers anlegbar ist, wobei der Dosierspender (9) in dieser Stellung im nicht verwendeten Zustand durch die Einhängevorrichtung gehalten wird.

8. Verpackung mit Dosierspender nach Anspruch 6 oder 7, dadurch gekennzeichnet, daß die Einhängevorrichtung aus einem Sockelteil (5) besteht, dessen Form und Abmessungen etwas kleiner sind als die des Durchbruchs (12) des Dosierspenders (9) und der an seiner Außenfläche einen oder mehrere Vorsprünge (6) enthält, die ein Einhängen des Dosierspenders (9) ermöglichen.

9. Verpackung mit Dosierspender nach einem der Ansprüche 1 bis 8, dadurch gekennzeichnet, daß das Verschlussmittel des Hohlkörpers (1) aus einem Stopfen (8) besteht, vorzugsweise vom Typ mit Sicherung.

10. Verpackung mit Dosierspender nach einem der Ansprüche 1 bis 5, dadurch gekennzeichnet, daß der Hohlkörper (1) an seiner oberen Seite eine im wesentlichen ebene Kontaktfläche aufweist, deren Abmessungen vorzugsweise im wesentlichen gleich denjenigen des Dosierspenders (9) sind, und daß der Dosierspender (9) eine im wesentlichen ebene Fläche enthält, welche an die Kontaktfläche des Hohlkörpers (1) anlegbar ist, wenn der Dosierspender (9) in der nicht verwendeten Stellung mit Hilfe der Verbindungsmittel (3, 13) an der Öffnung (2) befestigt ist.

11. Verpackung mit Dosierspender nach Anspruch 10, dadurch gekennzeichnet, daß der Dosierspender (9) zwischen dem Vorratsteil (10) und dem Durchbruch (12) einen gebogenen Bereich (16) enthält.

12. Verpackung mit Dosierspender nach Anspruch 11, dadurch gekennzeichnet, daß der Dosierspender (9) selbst das Verschlussmittel des Hohlkörpers (1) bildet und vorzugsweise ein Öffnungssystem vom Typ mit Sicherung enthält.

13. Verpackung mit Dosierspender nach einem der Ansprüche 1 bis 12, dadurch gekennzeichnet, daß der Dosierspender (9) zumindest teilweise transparent ausgeführt ist und ein Dosiermittel enthält, insbesondere Meßeinteilungen (11), durch welche die ausgegebene Produktmenge abgelesen werden kann.

14. Verpackung mit Dosierspender nach einem der Ansprüche 1 bis 13, dadurch gekennzeichnet, daß die Öffnung (2) des Hohlkörpers (1) in seinem Inneren und in einem Bereich nahe seines Endabschnitts ein Sieb enthält.

15. Verpackung mit Dosierspender nach einem der Ansprüche 1 bis 14, dadurch gekennzeichnet, daß der Hohlkörper (1) einstückig ausgeführt ist.

## Claims

1. A container with a dosing device of the type that comprises a hollow body (1) with an orifice (2), a removable hollow dosing device (9) and means for closing said orifice (2), wherein said orifice (2) comprises coupling means (3) and said dosing device (9) includes an opening (12) provided with complementary coupling means (13) for mounting in a removable and sealed manner said dosing device (9) on said orifice (2), characterized in that the face of the hollow body (1) which has said orifice (2) is a slant plane surface and in that the longitudinal axis of said slant plane surface and the vertical axis of said hollow body (1) are at a determined angle to each other, the longitudinal axis of said dosing device (9) extending downwards in the dosing device's filling mode, when it is mounted on said orifice (2) of the hollow body (1) and the hollow body is vertical.

2. A container with a dosing device according to claim 1, characterized in that the longitudinal axis of the dosing device (9) and the axis of said slant plane of the hollow body (1) are preferably substantially parallel or are at an angle in the range from about 5° to about 10° to each other.

3. A container with a dosing device according to claim 1, characterized in that the longitudinal axis of said slant plane surface and the vertical axis of said hollow body (1) are at an angle of about 45° to each other.

4. A container with a dosing device according to any of claims 1 to 3, characterized in that the coupling means (3) and the complementary coupling means (13) include screwed or inter-engaged coupling systems, and bayonet or snap-in coupling systems, or the like.

5. A container with a dosing device according to any of claims 1 to 4, characterized in that the dosing device (9) comprises a tank portion (10) terminated by said opening (12), the shape and size of said opening (12) being adapted to be fitted on said orifice (2) through said coupling means (3, 13).

6. A container with a dosing device according to any of claims 1 to 5, characterized in that the hollow body (1) includes, on one of its faces, a recess (4) forming a substantially flat contact surface, preferably of substantially the same size as that of the dosing device (9), wherein said contact surface is provided with attachment means for said dosing device (9) in its non-utilization mode.

7. A container with a dosing device according to any of claims 1 to 6, characterized in that said dosing device (9) comprises a tank portion (10) and has a substantially plane face adapted to be laid flat against said hollow body contact surface, wherein said dosing device (9) is maintained in this position in its non-utilization mode by said attachment means.

8. A container with a dosing device according to any of claims 1 to 7, characterized in that said attachment means consist in a base portion (5) whose shape and size are slightly smaller that those of the opening (12) of said dosing device (9) and including on its outer face one or more pins (6) for attaching said dosing device (9).

9. A container with a dosing device according to any of claims 1 to 8, characterized in that closing means for the hollow body is a plug (8), preferably of the safety type.

10. A container with a dosing device according to any of claims 1 to 5, characterized in that the hollow body (1) has on its upper face a substantially plane contact surface of substantially the same size as the dosing device (9), and in that said dosing device has a substantially plane face adapted to be laid flat against said contact surface of the hollow body (1), when said dosing device is mounted on said orifice (2) through the coupling means (3, 13), in its non-utilization mode.

11. A container with a dosing device according to claim 10, characterized in that the dosing device (9) has a bent region (16) between the tank portion (10) and the opening (12).

12. A container with a dosing device according to claim 11, characterized in that the dosing device (9) itself forms the hollow body (1) closing means and preferably has a safety opening system.

13. A container with a dosing device according to any of claims 1 to 12, characterized in that the dosing device (9) is at least partially transparent and has a dosing means such as graduations (11) for reading the amount of poured product.

14. A container with a dosing device according to any of claims 1 to 13, characterized in that the orifice (2) of said hollow body (1) has a screen mesh extending therein and within a region adjacent to its end.

15. A container with a dosing device according to any of claims 1 to 14, characterized in that said hollow body (1) is made of a single piece.
